# EUROPÄISCHE PATENTSCHRIFT

(11) **EP 0 790 422 B1**
(45) Veröffentlichungstag und Bekanntmachung des Hinweises auf die Patenterteilung: **17.07.2002**
(21) Anmeldenummer: 97101432.9
(22) Anmeldetag: 30.01.1997
(51) Int. Cl.: F16C 29/08

(54) **Führungseinrichtung mit Abdeckband**
Guiding device with protective covering
Dispositif de guidage avec bande protectrice

(30) Priorität: 14.02.1996 DE 19605387
(43) Veröffentlichungstag der Anmeldung: 20.08.1997
(73) Patentinhaber: Neff Antriebstechnik Automation GmbH, D-71111 Waldenbuch (DE)
(72) Erfinder: Barth, Waldemar, 71093 Weil-Breitenstein (DE); Christmann, Martin, 72770 Reutlingen (DE); Schön, Uwe, 71101 Schönaich (DE); Kec, Andreas, 72135 Dettenhausen (DE)
(74) Vertreter: Patentanwälte Rüger, Barthelt & Abel

(56) Entgegenhaltungen:
- DE-A- 4 334 311
- DE-C- 3 124 878
- GB-A- 857 715
- US-A- 4 991 494

## Beschreibung

Die Erfindung betrifft eine Führungseinrichtung zur Führung eines beweglichen Elementes auf einer vorgegebenen Bahn, mit den Merkmalen des Oberbegriffs des Patentanspruches 1 bzw 2.

Derartige Führungseinrichtungen sind in der Praxis bspw. als Linearlager in Gebrauch, bei denen ein Führungsrohr einen von einem Kraftausleitungselement durchgriffenen Längsschlitz aufweist, der ansonsten von einem durchgehenden Abdeckband abgedeckt ist. Das Abdeckband ist im Bereich des Kraftausleitungselementes von dem Längsschlitz abgehoben, so daß es diesen freigibt.

Solche Einrichtungen sind sowohl als Lager, als Antriebe, als bspw. als Meßwegaufnehmer, Sensoren oder dergleichen in Gebrauch. Der Schlitz ist in den meisten Fällen gerade ausgebildet, so daß sich das Kraftausleitungselement entlang einer Linearachse bewegt. Jedoch gibt es auch Fälle, bei denen das Kraftausleitungselement um eine Achse geschwenkt wird, wobei der von dem Abdeckband abzudeckende Schlitz bspw. konvex gekrümmt ist.

In allen Fällen soll das Abdeckband den Schlitz außerhalb des Kraftausleitungselementes möglichst staubdicht abdecken, um das Eindringen von Schmutz, Feuchtigkeit, Spänen oder dergleichen durch den Schlitz in den Innenbereich des Führungskörpers zu verhindern. Das Abdeckband muß dabei dicht an dem Schlitz gehalten sein. Andererseits soll es den Schlitz im Bereich des Kraftausleitungselementes freigeben, wobei es gewünscht ist, daß das Abdeckband die Bewegung des Kraftausleitungselementes möglichst nicht oder nur wenig behindert.

Schließlich kommt es bei derartigen Einrichtungen darauf an, daß das Abdeckband seine Funktion auf Dauer oder wenigstens sehr lange erfüllt, um vorzeitige Ausfälle der genannten Einrichtungen zu vermeiden.

Aus der US-PS 4.991.494 ist ein pneumatischer Linearantriebszylinder bekannt, der ein längsgeschlitztes Zylinderrohr mit einem darin abgedichtet verschiebbaren Kolben aufweist. Der Kolben ist über einen Steg mit einem an der Außenseite des Zylinderrohres gelagerten Schlitten verbunden. Der Längsschlitz ist von innen her mit einem Abdichtband abgedeckt, das zu beiden Seiten des Kolbens mit Ausnehmungen der Zylinderwandung verrastet ist. Von außen her ist der Längsschlitz mit einem stahlverstärkten Abdeckband abgedeckt, das im wesentlichen flach ausgebildet ist und zwei Längsrippen zur Verrastung mit entsprechenden, dem Schlitz benachbarten Längsnuten in dem Zylinderrohr aufweist. Jede Rastrippe liegt dabei seitlich vorgespannt einseitig in der zugeordneten, mit einer Hinterschneidung vorgesehenen Nut an. Die Andrückkräfte der beiden Rastrippen sind entgegengesetzt gerichtet und werden von dem den Längsschlitz überspannenden Teil des Abdeckbandes übertragen.

Um einen guten Halt des Abdeckbandes an dem Zylinderrohr zu erhalten, ist das Abdeckband mit einer Stahleinlage ausgesteift und relativ dick dimensioniert.

Außerdem ist aus der DE-A-4334311 eine Linearführung bekannt, die die Merkmale des Oberbegriffs des Patentanspruchs 1 offenbart. Die bekannte Linearführung weist einen Führungskörper auf, der einen Innenraum umschließt, in dem ein bewegliches Element verschiebbar gelagert ist. Der Führungskorper ist mit einem Längsschlitz versehen, der von einem Kraftausleitelement durchgriffen ist. Dieses ist mit einem außen an dem Führungskörper angeordneten Schlitten verbunden. Zur Abdeckung des Längsschlitzes dient ein Abdeckband, das als Längsnuten ausgebildete Rastausnehmungen aufweist. Diesen sind an dem Führungskörper ausgebildete Rastrippen zugeordnet. Beim Lösen und Wiederherstellen der Rastverbindung ist eine erhebliche Deformation des Abdeckbands erforderlich, wodurch relativ große Rastkräfte entstehen. Damit entsteht an dem Abdeckband erhebliche Walkarbeit, die zur Bewegung des Schlittens überwunden werden muss.

Davon ausgehend ist es Aufgabe der vorliegenden Erfindung, eine Führungseinrichtung mit einem Abdeckband zu schaffen, das einen vorhandenen Längsschlitz zuverlässig und dauerhaft abdeckt, während es eine Bewegung des Kraftausleitungselementes möglichst wenig behindert und die Mastkräfte klein hält.

Diese Aufgabe wird mit der Führungseinrichtung mit den Merkmalen des kennzeichnenden Teils des Patentanspruches 1 bzw. 2 gelöst. Der gesonderte Raum zur Aufnahme von Atrieb bzw. die Versteifung und Führungselement gewährleisten eine hohe Betriebsricherheit. Weitere bevorzugte Ausgestaltungen gehen aus den Unteransprüchen hervor.

Die Führungseinrichtung, die eine Linearführung, eine Kurvenführung oder dergleichen sein kann, ist wie bekannt mittels zweier Profilleistenverschlüsse zu beiden Seiten des Längsschlitzes an dem Führungskörper gehalten. Die Profilleistenverschlüsse halten das Abdeckband lokal, das heißt im Gegensatz zu dem aus dem Stand der Technik bekannten Linearantriebszylinder, ohne Gegenspannung durch das auf der anderen Schlitzseite angeordnete Verbindungsmittel. Der den Längsschlitz überbrückende Abschnitt des Abdeckbandes kann deshalb relativ dünn, das heißt weich und flexibel ausgelegt werden, so daß das Abdeckband insgesamt eine hohe Flexibilität aufweist. Dies erleichtert die Bewegung des Kraftausleitungselementes, wobei das Abdeckband von dem Kraftausleitungselement lokal von dem Führungskörper getrennt und wieder mit diesem verbunden wird.

Die Profilleistenverschlüsse können mit geringen Kräften ein- und ausgerastet werden, wobei die Haltekraft, die das Abdeckband an dem Führungskörper hält, trotz geringer Rastkraft groß ist. Dadurch ist ein sicherer Halt des Abdeckbandes gegeben.

Profilleistenverschlüsse ermöglichen eine lineare Relativbewegung zwischen Abdeckband und Führungskörper. Dadurch ist es möglich, Längenänderungen des Abdeckbandes infolge von Wärmedehnung und/oder Verschleiß automatisch auszugleichen, indem das Abdeckband endseitig automatisch nachgespannt wird. Dies gilt insbesondere, wenn das Profil der Kuppelelemente in Längsrichtung unverändert ist und wenn die Kuppelelemente mit geringem Spiel oder allenfalls geringer Vorspannung ineinandergreifen.

Der Profilleistenverschluß weist zwei Verschlußhälften auf, von denen eine eine Leiste oder Rippe und die andere eine entsprechende Nut aufweist. Die Nut ist so bemessen, daß die Leiste oder Rippe in der Nut verrastet ist, wenn sie in die Nut eingeschoben ist. Es ist sowohl möglich, die Verschlußhälfte mit der Rippe an dem Führungskörper und die Verschlußhälfte mit der Nut an dem Abdeckband auszubilden, als auch diese Anordnung umzukehren und die Rippe an dem Abdeckband auszubilden, wobei der Führungskörper dann eine entsprechende Nut aufweist. Jedoch ist es für die Funktion des Profilleistenverschlusses vorteilhaft, wenn die Rippen an dem Führungskörper ausgebildet sind. Diese sind dann starr. Das Abdeckband weist dann entsprechende flexible, zwischeneinander eine Nut begrenzende Lippen auf, die paarweise mit einer Rippe verrastet werden können.

Die Rippen sind vorzugsweise mit dem Führungskörper einstückig ausgebildet, der bspw. durch ein Aluminium-Strangpreßprofil gebildet ist.

Ein abgerundeter Querschnitt, der dadurch kantenfreien Rippen ermöglicht eine gewisse Selbstzentrierung der Profilleistenverschlüsse, wenn diese geschlossen werden.

Wenn die Rippen parallel zu der Öffnungsrichtung des Schlitzes von dem Führungskörper wegstehend ausgebildet sind, ist es möglich, das Abdeckband von dem Führungskörper zu trennen, indem es lediglich radial von diesem weggedrückt wird, und das Abdeckband mit dem Führungskörper zu verbinden, lediglich, indem das Abdeckband an den Führungskörper angedrückt wird.

Ein nach außen hin glatter Abschluß des Führungskörpers ist möglich, wenn die Profilleistenverschlüsse in seitlich neben dem Längsschlitz des Führungskörpers angeordneten Vertiefungen oder Ausnehmungen angeordnet sind.

Dabei ist es vorteilhaft, wenn die Vertiefungen und die Rippen derart bemessen sind, daß sich die Rippen nicht über die sich an den Schlitz anschließenden Flanken hinaus erstrecken. Dadurch wird das Rundprofil der jeweiligen Rippe, weil es nicht übersteht, vor Beschädigungen geschützt.

Es zeigt sich, daß derartig ausgebildete Profilleistenverschlüsse auf Dauer ohne Schmierung auskommen. Die Reibung ist aufgrund der relativ geringen erforderlichen Höhe der Verschlüsse gering, so daß Reibung und verschleiß ebenfalls gering sind.

In den Führungskörper, das heißt das Aluminium-Stangpreßprofil, läßt sich eine Auffangnut für gegebenenfalls entstehenden geringen Abrieb oder Verschmutzungen integrieren, indem zwischen der Rippe und der benachbarten Flanke ein ausreichender Zwischenraum wird.

Der Zwischenraum kann außerdem zur Aufnahme von zusätzlich an dem Abdeckband ausgebildeten Versteifungsund Führungselementen dienen. Diese sind bspw. einstückig mit dem Abdeckband ausgebildete Längsrippen zu beiden Seiten jedes Kuppelelementes, das wiederum durch ein Paar längs angeordneter Lippen gebildet ist. Die Längsrippen erstrecken sich vorzugsweise weiter von dem Abdeckband weg als die dazwischen liegenden Lippen. Sie dienen damit nicht nur zur Versteifung in Längsrichtung sondern auch als Abstützung beim Transport oder gegen Schläge. Beim Trennen des Abdeckbandes von dem Führungskörper in Fahrtrichtung vor dem Kraftausleitungselement können entsprechende, das Abdeckband von dem Schlitz abhebende Elemente von unten her an den Längsrippen angreifen, ohne mit den Lippen in Berührung zu kommen, die das Kuppelelement bilden. Dadurch wird eine Deformierung oder Beschädigung der Lippen verhindert, die ansonsten zum vorzeitigen Ausfall des Abdeckbandes führen könnte.

Bandhalterungen an den Enden des abzudeckenden Schlitzes, die als Rücklaufsperren ausgebildet sind und automatisch überschüssige Abdeckbandlängen aufnehmen können, ermöglichen ein automatisches Straffen des Abdeckbandes.

In der Zeichnung ist ein Ausführungsbeispiel der Erfindung dargestellt. Es zeigen:
- Fig. 1: einen Linearantrieb mit einer Führungseinrichtung, die einen durch ein Abdeckband abgedeckten Längsschlitz aufweist, in perspektivischer und stark schematisierter Darstellung,
- Fig. 2: den Linearantrieb nach Fig. 1 mit einer teilweise aufgeschnittenen, schematisiert dargestellten Führungseinrichtung, im Längsschnitt,
- Fig. 3: den Führungskörper der Führungseinrichtung nach den Fig. 1 und 2, mit dem Abdeckband in eingerasteter sowie von dem Führungskörper getrennter Stellung, in vereinfachter Querschnittsdarstellung,
- Fig. 4: das Abdeckband und den Führungskörper sowie insbesondere einen durch Abdeckband und Führungskörper ausgebildeten Profilleistenverschluß, in ausschnittsweiser Querschnittsdarstellung in einem anderen Maßstab, und
- Fig. 5: eine an der Führungseinrichtung vorgesehene Spanneinrichtung zur endseitigen Halterung des Abdeckbandes, in schematischer und ausschnittsweiser Darstellung.

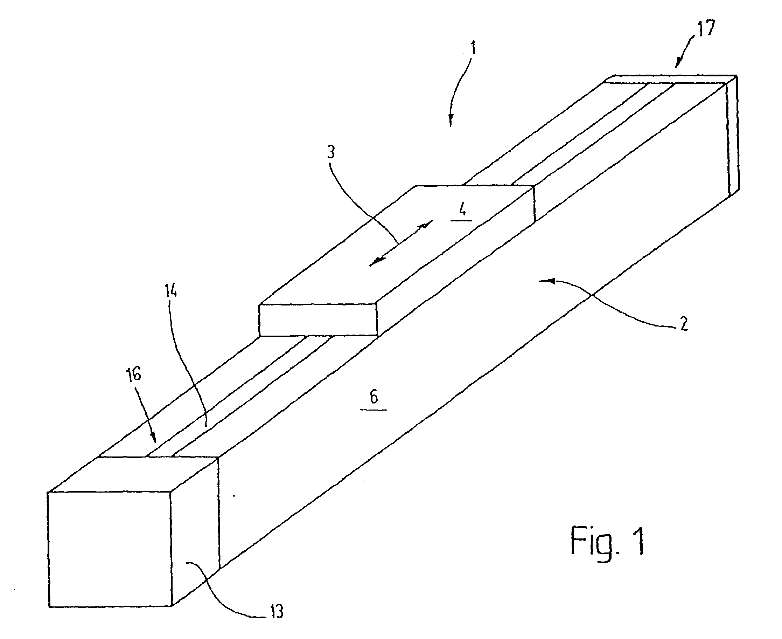

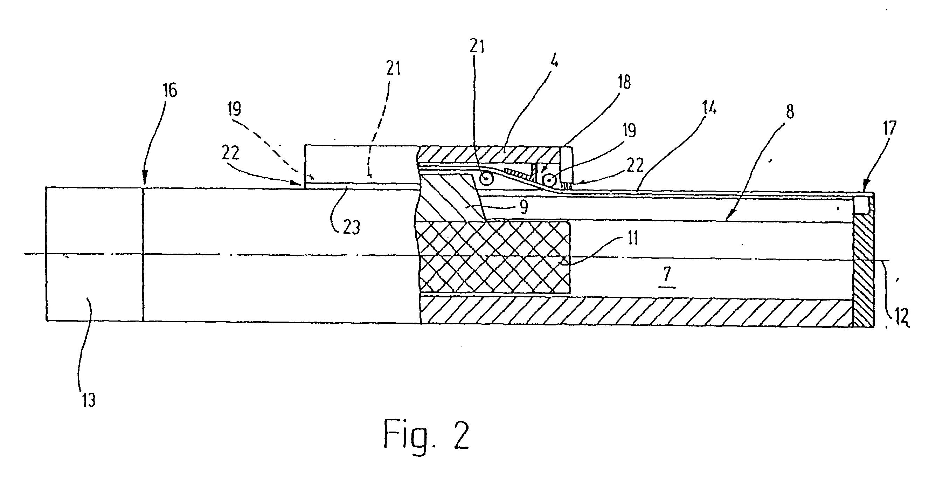

In Fig. 1 ist ein Linearantrieb 1 dargestellt, der einen an einer Führungseinrichtung 2 entlang einer Bewegungsrichtung 3 verschiebbar gelagerten Schlitten 4 aufweist. Die Führungseinrichtung 2 ist als Linearführung ausgebildet, deren Führungskörper 6 bei einer im wesentlichen quadratischen Querschnittsform einen längsverlaufenden Innenraum 7 (Fig. 2) umschließt. Der Innenraum 7 ist über einen Längsschlitz 8 nach außen zugänglich, der in Längsrichtung über eine Flanke des Führungskörpers, in Fig. 1 über die obere Flanke des Führungskörpers 3 verläuft.

Der Schlitten 4 erstreckt sich mit einem Kraftausleitungselement 9 durch den Schlitz 8 in den Innenraum 7 und ist mit einem in dem Innenraum 7 angeordneten Antriebselement 11 verbunden. Das Antriebselement 11 ist über ein in Fig. 2 lediglich durch eine strichpunktierte Linie angedeutetes Kraftübertragungselement 12 mit einem Antrieb 13 verbunden, der dem Antriebselement 11 über das Kraftübertragungselement 12 eine gezielte Linearbewegung erteilen kann. Das Kraftübertragungselement 12 kann eine Kugelgewindespindel, ein Zugmittel oder ein ähnliches Getriebeelement sein.

Wie aus den Fig. 1 und 2 hervorgeht, ist der Schlitz 8 außerhalb des Schlittens 4 mittels eines Abdeckbandes 14 nach außen hin geschlossen. Das Abdeckband 14 ist bei seinen Enden 16, 17 gehalten und erstreckt sich entlang des Schlitzes 8, wobei es durch einen Axialdurchgang des Schlittens 4 geführt ist. In dem Axialdurchgang ist als Führungselement zur Führung des Abdeckbandes 14 bei jedem stirnseitigen Ende des Schlittens 4 jeweils eine an der Außenseite des Abdeckbandes 14 abwälzende Rolle 19 angeordnet.

Zum Trennen des Abdeckbandes 14 von dem Führungskörper 6 sind zwei an der Innenseite des Abdeckbandes 14 abwälzende Rollen 21 vorgesehen, die wie die Rollen 19 mit quer zu der Bewegungsrichtung 3 des Schlittens 4 ausgerichteten Drehachsen drehbar an dem Schlitten 4 gelagert sind.

Zur Abdichtung des Axialdurchganges 18 nach außen ist der Schlitten 4 an jeder Stirnseite mit jeweils einer Bürstenleiste 22 versehen, die an dem Abdeckband 14 und der Außenflanke des Führungskörpers 6 reibt. Seitlich ist der Schlitten 4 durch Gummi- oder Kunststofflippen 23 abgedichtet, die auch den Axialdurchgang 18 abschließen und mit einer Kante in Längsrichtung auf der Außenflanke des Führungskörpers 6 gleiten.

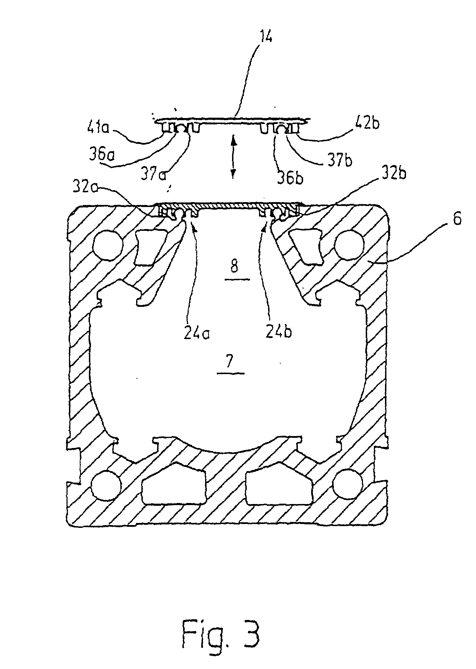

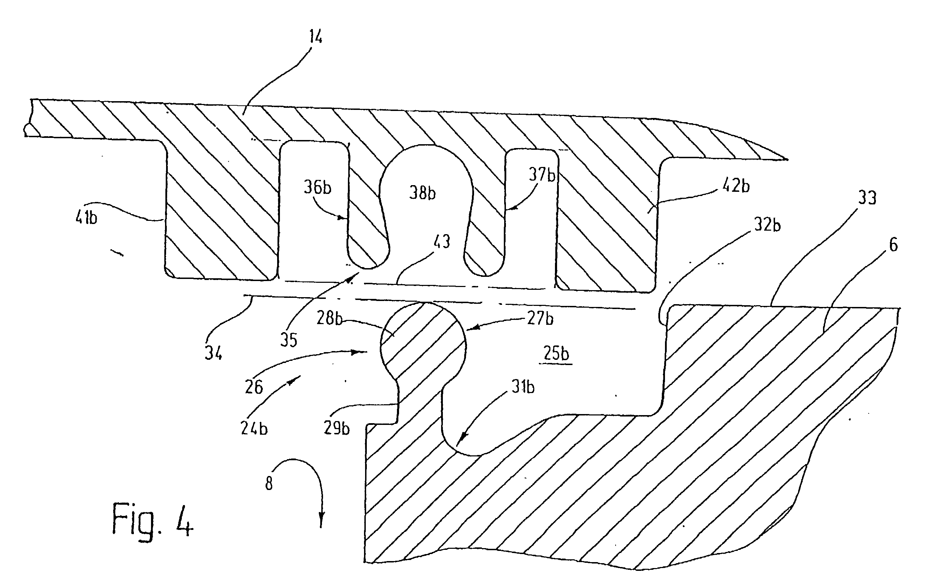

Das Abdeckband 14 ist, wie insbesondere aus den Fig. 3 und 4 hervorgeht, mittels zweiter Profilleistenverschlüsse 24a, 24b an dem Grundkörper 6 gehalten. Die Profilleistenverschlüsse 24a, 24b sind symmetrisch zu einer die Längsmittelachse des Führungskörpers 6 enthaltenden und den Schlitz 8 symmetrisch teilenden Längsebene ausgebildet. Im Folgenden wird deshalb lediglich der in Fig. 4 gesondert dargestellte Profilleistenverschluß 24b beschrieben, dessen Einzelheiten sich entsprechend an dem Profilleistenverschluß 24a wiederfinden. Bezugnahmen auf einen Profilleistenverschluß 24 und seine Elemente mit Bezugszeichen ohne Buchstabenindex, wie z.B. in den Patentansprüchen und in der Funktionsbeschreibung, sind auf beide Profilleistenverschlüsse 24a, 24b anwendbar.

Der Führungskörper 6 weist im Anschluß an seinen Schlitz 8 eine längsverlaufende Ausnehmung 25 auf, in der ein eine Hälfte des Profilleistenverschluß' 24b bildendes Kuppelelement 26 als Rippe 27b einstückig mit dem Führungskörper 6 ausgebildet ist. Die Rippe 27b weist ein hinterschnittenes Schienenprofil mit einem im wesentlichen runden Kopf auf. An diesen im Querschnitt im wesentlichen kreisförmigen Kopfabschnitt 28b schließt sich ein etwa parallelflankig begrenzter Steg 29b an, der einstükkig in den Führungskörper 6 übergeht und schmaler ist als der Kopfabschnitt 28b.

An den Steg 29b schließt sich eine an der Rippe 27b entlanglaufende Rinne oder Vertiefung 31b in dem Boden der Ausnehmung 25b zur Aufnahme von Staub oder eventuell anfallendem Abrieb an. Die Vertiefung 31b ist dabei an der von dem Schlitz 8 abliegenden Seite des Steges 29b bzw. des Kuppelelementes 26b angeordnet.

In größerem Abstand zu der Rippe 27 b weist die Ausnehmung 25 b eine Flanke 32 b auf, die in rechtem Winkel zu einer sich an den Schlitz 8 und die Ausnehmung 25 anschließenden Außenflanke 33 des Grundkörpers 6 ausgerichtet ist. Der Zwischenraum zwischen dem Kuppelelement 26 und der Flanke 32b ist gering und dient der Aufnahme von vorspringenden Abschnitten des Abdeckbandes 14.

Wie aus Fig. 4 hervorgeht, ist die Rippe 27b gegenüber der Außenflanke 33 zurückversetzt. Gleiches gilt für die Rippe 27a, so daß die beiden Rippen 27a, 27b eine Ebene 34 definieren, die parallel zu der Außenflanke 33, jedoch nach innen zu, das heißt in Fig. 4 nach unten, gegen diese versetzt ist.

Das Abdeckband 14 weist als zu der Rippe 37b komplementäres Kuppelelement 35 an jeder Seite ein Paar längsverlaufender Lippen 36b, 37b auf, die einstükkig an dem Abdeckband 14 ausgebildet sind. Die Lippen 36b 37b erstrecken sich etwa im rechten Winkel zu dem übrigen Abdeckband 14 und sind im Abstand parallel zueinander angeordnet. Zwischen den Lippen 36b, 37b ist eine Längsnut 38b ausgebildet, deren Querschnitt der Außenkontur der Rippe 27b im wesentlichen entspricht. Die Lippen 36b, 37b hintergreifen in eingerastetem Zustand den Abschnitt 28b der Rippe 27b. Die Lippen 36b, 37b sind dabei so bemessen, daß sie in eingerastetem Zustand mit allenfalls geringem Druck an der Rippe 27b anliegen. Die Haltewirkung kommt als Rastwirkung zustande. Es ist auch möglich, die Kuppelelemente 26, 35, das heißt die Rippe 27b und die Lippen 36b, 37b so zu dimensionieren, daß die Lippen mit geringem Spiel auf der Rippe sitzen, diese jedoch rastend hintergreifen. Dies ermöglicht eine Längsverschiebbarkeit des Abdeckbandes 14 mit geringer Axialkraft, wie es zum später beschriebenen Nachspannen des Abdeckbandes 14 erforderlich ist.

Zu beiden Seiten des von den Lippen 36b, 37b gebildeten Kuppelelementes 35 sind an dem Abdeckband 14 Längsrippen 41b, 42b mit im wesentlichen rechteckigem Querschnitt ausgebildet. Die Längsrippen 41b, 42b erstrecken sich dabei weiter von dem Abdeckband 14 weg als die Lippen 36b, 37b, so daß sie mit ihren dem Führungskörper 6 zugewandten Stirnseiten eine Ebene 43 definieren, die von den Lippen 36b, 37b nicht erreicht wird. Die Längsrippen 41b, 42b dienen der Aussteifung des Abdeckbandes 14 in Längsrichtung und als Anlageflächen für die aus der Fig. 2 ersichtlichen Rollen 21, die das Abdeckband 14 aus dem Schlitz 8 herausführen.

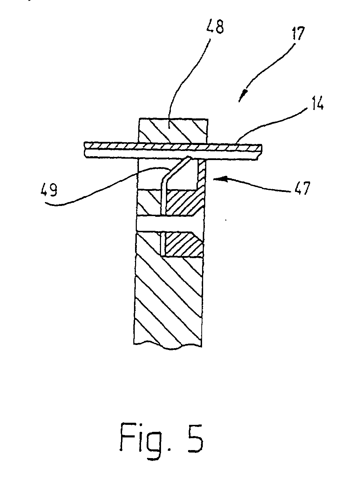

Das Abdeckband 14 ist wenigstens bei seinem Ende 17 in einer in Fig. 5 schematisch angedeuteten Rücklaufsperre 47 gehalten. Diese wird durch eine das Abdeckband 14 gegen ein Anlageelement 48 spannende Blattfeder 49 gebildet, die eine Bewegung des Abdeckbandes 14 nach außen, das heißt in Fig. 5 nach rechts, ermöglicht, einen Rückzug jedoch sperrt. Die Rücklaufsperre 47 dient der automatischen Nachspannung des Abdeckbandes 14.

Der insoweit beschriebene Linearantrieb 1 arbeitet wie folgt:

In Betrieb bewegt der Antrieb 13 über das Kraftübertragungselement 12 das Antriebselement 11, das über das Kraftausleitungselement 9 den Schlitten 4 in einer der Bewegungsrichtungen 3 mitnimmt, das heißt in Fig. 2 nach rechts oder nach links verfährt.

Die außerhalb des Schlittens 4 liegenden Abschnitte des Abdeckbandes 14 sind mit dem Führungskörper 6 verbunden und decken den Schlitz 8 ab. Die Lippen 36, 37 des Abdeckbandes 14 (Fig. 4) sitzen auf der Rippe 27. Die Lippen 36, 37 sind gegenüber ihrer Ruhelage nicht oder nur unwesentlich gespreizt. Das Abdeckband 14 ist deshalb mit geringer Reibung in Längsrichtung verschiebbar, wobei es jedoch sicher an dem Führungskörper 6 gehalten ist und abdichtend an diesem anliegt. Damit ist der Innenraum 7 gegen Zutritt von Staub oder anderen Verschmutzungen geschützt. Im Bereich des Schlittens ist das Abdeckband von dem Schlitz 8 abgehoben und durch den Axialdurchgang des Schlittens 4 geführt. Die Kuppelelemente 26, 35 sind in diesem Bereich getrennt. In einem Übergangsbereich zwischen dem Bereich, in dem das Abdeckband 14, an dem Führungskörper 6 anliegt (Kuppelelemente 26, 35 eingerastet), und dem Bereich, in dem das Abdeckband abgehoben ist (Kuppelelemente 26, 35 getrennt), sind Abschnitte der Lippen 36, 37 gespreizt, das heißt wellenförmig elastisch nach außen gebogen.

In Fahrtrichtung des Schlittens liegende Abschnitte des Abdeckbandes 14 werden, sobald sie von dem Schlitten 4 erreicht sind, durch die Wirkung der Rolle 21 aus ihrer eingerasteten Stellung herausgehoben. Das Abdeckband 14 wird dabei von dem Führungskörper 6 abgehoben, wobei die Lippen 36, 37 beim Abrutschen von der Rippe 27 abschnittsweise geringfügig und vorübergehend gespreizt werden. Die Rolle 21 greift dabei an den Längsrippen 41, 42 des Abdeckbandes 14 an, ohne die Lippen 36, 37 zu berühren. Diese sind dadurch vor Deformation und Abnutzung weitgehend geschützt.

Die durch die Längsrippen 41, 42 bewirkte Längsaussteifung des Abdeckbandes 14 hat zur Folge, daß das Abdeckband 14 unmittelbar im Anschluß an die das Abdeckband 14 an dem Führungskörper haltende Rolle 19 von dem Führungskörper 6 abgehoben wird.

An der bezüglich der Fahrtrichtung hinten liegenden Seite des Schlittens 4 wird das Abdeckband 14 über die entsprechende Rolle 19 an den Führungskörper 6 angedrückt, wobei die Lippen 36, 37 auf die Rippe 27 schnappen und das Abdeckband an dem Führungskörper 6 halten. Die Haltekraft erzeugt jeder Profilleistenverschluß unabhängig von dem anderen. Die Rastwirkung kommt zwischen den Lippen 36, 37 eines Lippenpaares zustande. Der Kraftweg ist kurz und überbrückt den Schlitz 8 nicht. Der den Schlitz 8 überspannende Teil des Abdeckbandes 14 ist deshalb frei von Rastkräften und kann entsprechend flexibei oder weich ausgelegt werden.

Sowohl das Abheben des Abdeckbandes von dem Führungskörper 6 als auch das Befestigen durch Andrücken erfolgt mit geringen dazu erforderlichen Kräften. Die Lippen 36, 37 bewirken im Zusammenwirken mit den abgerundeten Rippen 27a, 27b eine gewisse seitliche Ausrichtung oder Zentrierung des Abdeckbandes 14. Es wird somit gewissermaßen ein Fangbereich der Profilleistenverschlüsse ausgebildet, die von den Kuppelelementen 26, 35, das heißt der Leiste 27 und den Lippen 36, 37, gebildet sind. Eine den Fangbereich übersteigende, seitliche Dejustage des Abdeckbandes 14 in Bezug auf den Führungskörper 6 wird durch die außen liegenden Längsrippen 41a, 42b des Abdeckbandes 14 verhindert. Diese passen mit wenig Spiel zwischen die einander gegenüber liegenden Flanken 32a, 32b der Ausnehmungen 25a, 25b und definieren somit die seitliche Lage des Abdeckbandes 14.

Zum Abdecken eines Längsschlitzes 8 bei einem Linearantrieb 1 oder einer anderweitigen Führungseinrichtung ist ein Abdeckband 14 vorgesehen, das mittels Profilleistenverschlüssen 26, 35 an dem zu der Führungseinrichtung 1 gehörigen Grundkörper gehalten ist. Die Profilleistenverschlüsse 26, 36 werden durch eine wulstartig ausgebildete Leiste oder Rippe 27 gebildet, die zwischen zwei längsverlaufende Lippen 36, 37 eingeklipst wird. Die Lippen 36, 37 sind bspw. an dem Abdeckband 14 vorgesehen, während die wulstförmig ausgebildete Rippe 27 an dem vorzugsweise als Aluminium-Strangpreßprofil ausgebildeten Führungskörper 6 ausgeformt ist.

## Patentansprüche

1. Führungseinrichtung (2) zur Führung eines beweglichen Elementes (9) auf einer vorgegebenen Bahn,
mit einem Führungskörper (6), der einen von dem beweglich gelagerten Element (9) durchgriffenen Schlitz (8) aufweist,
mit einem Abdeckband (14), das von Verbindungsmitteln (24) lösbar an dem Schlitz (8) gehalten ist, die zwischen dem Führungskörper (6) und dem Abdeckband (14) wirken,
wobei zu jedem Verbindungsmittel (24) eine an dem Führungskörper (6) neben dem Schlitz (8) ausgebildete und entlang des Schlitzes (8) verlaufende Rippe (27) als erstes Kuppelelement (26) gehört, die einen abgerundeten Querschnitt aufweist und über einen Steg (29) mit dem Führungskörper (6) verbunden ist, der schmaler ist als der Querschnitt der Rippe (27),
wobei jeder Rippe (27) wenigstens ein komplementäres zweites Kuppelelement (35) zugeordnet ist, das an dem Abdeckband (14) ausgebildet ist und eine Ausnehmung (38) definiert, deren jeweiliger Querschnitt dem Querschnitt der als erstes Kuppelelement (26) dienenden Rippe (27) im wesentlichen entspricht, wobei das zweite Kuppelelement (35) das erste Kuppelelement (25) im eingerasteten Zustand hintergreift,
wobei die an dem Abdeckband (14) als Kuppelelement (35) ausgebildete Ausnehmung (38) jeweils zwischen zwei im Abstand zueinander an dem Abdeckband (14) einstückig ausgebildeten Lippen (36, 37) gebildet wird, die aufeinander zu und voneinander weg federnd ausgebildet sind, so daß das Kuppelelement (35) jeweils von einem Lippenpaar gebildet ist,
wobei die Rippen (27) parallel zu der Öffnungsrichtung des Schlitzes (8) von dem Führungskörper (6) weg stehend ausgebildet
und in beidseits des Schlitzes (8) ausgebildeten Vertiefungen (25) angeordnet sind,
**dadurch gekennzeichnet daß** zwischen der Rippe (27) und der benachbarten, sich in gleicher Richtung erstreckenden Flanke (32) der Vertiefung (25) ein gesonderter Raum (31) zur Aufnahme von Abrieb ausgebildet ist.

2. Führungseinrichtung (2) zur Führung eines beweglichen Elementes (9) auf einer vorgegebenen Bahn,
mit einem Führungskörper (5), der einen von dem beweglich gelagerten Element (9) durchgriffenen Schlitz (8) aufweist,
mit einem Abdeckband (14), das von Verbindungsmitteln (24) lösbar an dem Schlitz (8) gehalten ist, die zwischen dem Führungskörper (6) und dein Abdeckband (14) wirken,
wobei zu jedem Verbindungsmittel (24) eine an dem Führungskörper (6) neben dem Schlitz (8) ausgebildete und entlang des Schlitzes (8) verlaufende Rippe (27) als erstes Kuppelelement (26) gehört, die einen abgerundeten Querschnitt aufweist und über einen Steg (29) mit dem Führungskörper (6) verbunden ist, der schmaler ist als der Querschnitt der Rippe (27),
wobei jeder Rippe (27) wenigstens ein komplementäres zweites Kuppelelement (35) zugeordnet ist, das an dem Abdeckband (14) ausgebildet ist und eine Ausnehmung (38) definiert, deren jeweiliger Querschnitt dem Querschnitt der als erstes Kuppelelement (26) dienenden Rippe (27) im wesentlichen entspricht, wobei das zweite Kuppelelement (35) das erste Kuppelelement (26) im eingerasteten Zustand hintergreift, und
wobei die an dem Abdeckband (14) als Kuppelelement (35) ausgebildete Ausnehmung (38) jeweils zwischen zwei im Abstand zueinander an dem Abdeckband (14) einstückig ausgebildeten Lippen (36, 37) gebildet wird, die aufeinander zu und voneinander weg federnd ausgebildet sind, so dass das kupplungselement jeweils von einem Lippenpaar gebildet ist, wobei das Abdeckband (14) im wesentlichen flach ausgebildet ist und an der Außenseite des Führungskörpers (6) anliegt wobei die Rippen (27) parallel zu der Öffnungsrichtung des Schlitzes (8) von dem Führungskörper (6) wegstehend augebildet und in beidseits des Schlitzes (8) ausgebildeten Vertiefungen (25) angeordnet sind,
**dadurch gekennzeichnet, daß** an dem Abdeckband (14) an seiner dem Führungskörper (6) zugewandten Seite Versteifungs- und Führungselemente (41, 42) ausgebildet sind, und
daß die Versteifungs- und Führungselemente (41, 42) mit dem Abdeckband (14) einstückig ausgebildete Längsrippen sind, die paarweise zwischeneinander ein Kuppelelement (35) einschließen, und
daß sich die Längsrippen (41, 42) weiter von dem Abdeckband (14) weg erstrecken als das jeweilige dazwischen liegende Kuppelelement (35).

3. Führungseinrichtung nach Anspruch 1, **dadurch gekennzeichnet, daß** die Rippen (27) mit dem Führungskörper (6) einstückig ausgebildet sind.

4. Führungseinrichtung nach Anspruch 1, **dadurch gekennzeichnet, daß** die Vertiefungen (25) und die Rippen (27) derart bemessen sind, daß sich die Rippen (27) nicht über die sich an den Schlitz (8) anschließende Flanke (33) hinaus erstrecken.

5. Führungseinrichtung nach Anspruch 1, **dadurch gekennzeichnet, daß** die Rippen (27) und die Kuppelelemente (35) über ihre gesamte Länge jeweils einen unveränderlichen Querschnitt aufweisen.

## Claims

1. Guidance device (2) for guiding a movable element (9) on a predetermined path,
with a guide body (6), which has a slot (8) penetrated by the movably disposed element (9),
with a covering band (14) held detachably on the slot (8) by connecting elements (24), which act between the guide body (6) and the covering band (14),
wherein to each connecting element (24) a rib (27) constructed on the guide body (6) next to the slot (8) and extending along the slot (8) belongs as a first coupling element (26), said rib having a rounded cross-section and being connected to the guide body (6) via a web (29), which is narrower than the cross-section of the rib (27),
wherein each rib (27) has at least one complementary second coupling element (35) assigned to it, which is constructed on the covering band (14) and defines a recess (38), the respective cross-section of which corresponds to the cross-section of the rib (27) serving as first coupling element (26), the second coupling element (35) engaging behind the first coupling element (26) in the engaged state,
wherein the recess (38) constructed on the covering band (14) as coupling element (35) is formed respectively between two lips (36, 37), which are constructed in one piece at a distance from one another on the covering band (14) and which are constructed to spring towards one another and away from one another so that the coupling element (35) is respectively formed by a lip pair,
wherein the ribs (27) are constructed parallel to the opening direction of the slot (8) to stand remote from the guide body (6),
and are disposed in depressions (25) constructed on both sides of the slot (8),
**characterised in that**
between the rib (27) and the adjacent flank (32) of the depression (25) extending in the same direction a separate area (31) is constructed to receive abrasion waste.

2. Guidance device (2) for guiding a movable element (9) on a predetermined path,
with a guide body (6), which has a slot (8) penetrated by the movably disposed element (9),
with a covering band (14) held detachably on the slot (8) by connecting elements (24), which act between the guide body (6) and the covering band (14),
wherein to each connecting element (24) a rib (27) formed on the guide body (6) next to the slot (8) and extending along the slot (8) belongs as a first coupling element (26), said rib having a rounded cross-section and being connected to the guide body (6) via a web (29), which is narrower than the cross-section of the rib (27),
wherein each rib (27) has at least one complementary second coupling element (35) assigned to it, which is constructed on the covering band (14) and defines a recess (38), the respective cross-section of which corresponds to the cross-section of the rib (27) serving as first coupling element (26), the second coupling element (35) engaging behind the first coupling element (26) in the engaged state,
wherein the recess (38) constructed on the covering band (14) as coupling element (35) is formed respectively between two lips (36, 37), which are constructed in one piece at a distance from one another on the covering band (14) and which are constructed to spring towards one another and away from one another so that the coupling element is respectively formed by a lip pair,
wherein the covering band (14) is constructed to be essentially flat and abuts against the outside of the guide body (6),
wherein the ribs (27) are constructed parallel to the opening direction of the slot to stand remote from the guide body (6), and are disposed in depressions constructed on both sides of the slot (8),
**characterised in that**
reinforcing and guide elements (41, 42) are constructed on the covering band (14) on its side facing the guide body (6), and
that the reinforcing and guide elements (41, 42) are longitudinal ribs constructed in one piece with the
covering band (14), which in pairs enclose a coupling element (35) between them, and
that the longitudinal ribs (41, 42) extend further away from the covering band (14) than the respective coupling element (35) located between them.

3. Guidance device according to Claim 1, **characterised in that** the ribs (27) are constructed in one piece with the guide body (6).

4. Guidance device according to Claim 1, **characterised in that** the depressions (25) and the ribs (27) are dimensioned in such a manner that the ribs (27) do not extend beyond the flank (33) adjoining the slot (8).

5. Guidance device according to Claim 1, **characterised in that** the ribs (27) and the coupling elements (35) respectively have a constant cross-section over their entire length.

## Revendications

1. Dispositif de guidage (2) pour le guidage d'un élément (9) mobile suivant un trajet prédéterminé, comprenant
un corps de guidage (6) qui présente une fente (8) traversée par l'élément (9) monté mobile, et
une bande de recouvrement (14) qui est maintenue de façon amovible au niveau de la fente (8) par des moyens de liaison (24) agissant entre le corps de guidage (6) et la bande de recouvrement (14),
chaque moyen de liaison (24) comprenant, en tant que premier élément de couplage (26), une nervure (27) qui est disposée sur le corps de guidage (6) à côté de la fente (8) en s'étendant le long de la fente (8), qui présente une section arrondie et qui est reliée au corps de guidage (6) par une âme (29) plus étroite que la section de la nervure (27),
un second élément de couplage (35) complémentaire, associé à chaque nervure (27), étant disposé sur la bande de recouvrement (14) et définissant un évidement (38) dont la section correspond essentiellement à la section de la nervure (27) servant de premier élément de couplage (26), le second élément de couplage (35) étant engagé derrière le premier élément de couplage (26) à l'état encliqueté,
l'évidement (38) disposé sur la bande de recouvrement (14) en tant qu'élément de couplage (35) étant formé respectivement entre deux lèvres (36, 37) réalisées à distance l'une de l'autre d'une seule pièce sur la bande de recouvrement (14) de manière à pouvoir être rapprochées et écartées élastiquement l'un de l'autre de sorte que l'élément de couplage (35) soit formé respectivement par une paire de lèvres,
les nervures (27) étant conformées de manière à faire saillie sur le corps de guidage (6) parallèlement à la direction de l'ouverture de la fente (8) et étant disposées dans des parties en creux (25) formées des deux côtés de la fente (8),
**caractérisé par le fait qu'**un espace (31) séparé servant à recevoir des résidus d'usure est formé entre la nervure (27) et le flanc (33) voisin de la partie en creux (25), s'étendant dans la même direction.

2. Dispositif de guidage (2) pour le guidage d'un élément (9) mobile suivant un trajet prédéterminé, comprenant
un corps de guidage (6) qui présente une fente (8) traversée par l'élément (9) monté mobile, et
une bande de recouvrement (14) qui est maintenue de façon amovible au niveau de la fente (8) par des moyens de liaison (24) agissant entre le corps de guidage (6) et la bande de recouvrement (14),
chaque moyen de liaison (24) comprenant, en tant que premier élément de couplage (26), une nervure (27) qui est disposée sur le corps de guidage (6) à côté de la fente (8) en s'étendant le long de la fente (8), qui présente une section arrondie et qui est reliée au corps de guidage (6) par une âme (29) plus étroite que la section de la nervure (27),
un second élément de couplage (35) complémentaire, associé à chaque nervure (27), étant disposé sur la bande de recouvrement (14) et définissant un évidement (38) dont la section correspond essentiellement à la section de la nervure (27) servant de premier élément de couplage (26), le second élément de couplage (35) étant engagé derrière le premier élément de couplage (26) à l'état encliqueté,
l'évidement (38) disposé sur la bande de recouvrement (14) en tant qu'élément de couplage (35) étant formé respectivement entre deux lèvres (36, 37) réalisées à distance l'une de l'autre d'une seule pièce sur la bande de recouvrement (14) de manière à pouvoit être rapprochées et écartées élastiquement l'un de l'autre de sorte que l'élément de couplage (35) soit formé respectivement par une paire de lèvres,
la bande de recouvrement (14) étant essentiellement plate et appliquée contre le côté extérieur du corps de guidage (6), les nervures (27) étant conformées de manière à faire saillie sur le corps de guidage (6) parallèlement à la direction de l'ouverture de la fente (8) et étant disposées dans des parties en creux (25) formées des deux côtés de la fente (8),
**caractérisé par le fait que** des éléments de raidissement et de guidage (41, 42) sont formés sur la bande de recouvrement (14) sur le côté tourné vers le corps de guidage (6), que les éléments de raidissement et de guidage (41, 42) sont des nervures longitudinales formées d'une seule pièce avec la bande de recouvrement (14) et comportant par paire entre elles un élément de couplage (35), et que les nervures longitudinales (41, 42) font saillie sur la bande de recouvrement (14) plus loin que l'élément de couplage (35) situé respectivement entre elles.

3. Dispositif de guidage selon la revendication 1, **caractérisé par le fait que** les nervures (27) sont formées d'une seule pièce avec le corps de guidage (6).

4. Dispositif de guidage selon la revendication 1, **caractérisé par le fait que** les parties en creux (25) et les nervures (27) sont dimensionnées de manière que les nervures ne s'étendent pas au-delà du flanc (33) qui se raccorde à la fente (8).

5. Dispositif de guidage selon la revendication 1, **caractérisé par le fait que** les nervures (27) et les éléments de couplage (35) présentent respectivement une section invariable sur toute leur longueur.
